# EUROPEAN PATENT SPECIFICATION

(11) **EP 3 167 673 B1**
(45) Date of publication and mention of the grant of the patent: **05.12.2018**
(21) Application number: 15753764.8
(22) Date of filing: 01.07.2015
(51) Int. Cl.: H04W 72/12

(54) **TELECOMMUNICATION SYSTEM AND METHOD WITH AN INNOVATIVE SOLUTION FOR USER PROFILING AND MANAGEMENT OF CONGESTION BASED ON DYNAMIC TRAFFIC PRIORITY (PBS - PRIORITY BASED SUBSCRIPTIONS)**
TELEKOMMUNIKATIONSSYSTEM UND VERFAHREN MIT EINER NEUARTIGEN LÖSUNG ZUR BENUTZERPROFILIERUNG UND VERWALTUNG VON ÜBERLASTUNG AUF DER BASIS VON DYNAMISCHER VERKEHRSPRIORITÄT (PBS - PRIORITÄTSBASIERTE ABONNEMENTS)
SYSTÈME ET PROCÉDÉ DE TÉLÉCOMMUNICATION AYANT UNE SOLUTION INNOVANTE POUR UN PROFILAGE D'UTILISATEUR ET UNE GESTION DE CONGESTION SUR LA BASE D'UNE PRIORITÉ DE TRAFIC DYNAMIQUE (PBS - ABONNEMENTS BASÉS SUR UNE PRIORITÉ)

(30) Priority: 07.07.2014 IT VI20140178
(43) Date of publication of application: 17.05.2017
(73) Proprietor: Open Sky S.p.A., 36100 Vicenza (VI) (IT)
(72) Inventor: MUNARINI, Walter, I-36100 Vicenza (VI) (IT); CARNIATO, Luca, I-35135 Padova (PD) (IT); FONGHER, Federica, I-30126 Venezia (VE) (IT)
(74) Representative: Ziliotto, Tiziano
(86) International application number: PCT/IB2015/054965
(87) International publication number: WO 2016/005860

(56) References cited:
- US-A1- 2010 088 443
- US-A1- 2012 057 478

## Description

The present invention concerns the field of telecommunications. More particularly, it concerns methods and systems intended to efficiently manage a plurality of services and/or users sharing a communication channel with limited capacity.

Data transmission has recently become increasingly widespread. The last decades have witnessed the passage from analog data transmission systems, almost limited to audio data, to digital data transmission systems for various types of data. Digital data modulation, together with the development of transmission technologies, has allowed the exponential development of the quantity of transported data. Nevertheless, still today and for the near future, the quantity of data to be transmitted often exceeds and/or will exceed the capacity of the transmission means. In other words, the capacity of the channel is often insufficient to allow all the users of said channel to use it to transmit or receive all the data they can transmit or receive. An example thereof is the transmission of data from a PC to another PC through the internet. While, on the one hand, a PC can easily transmit data at 10Gbit/s, for the channel connecting the two PCs it is difficult to manage such a data band, especially in the presence of other communication flows.

These problems are common both for channels of the wired type such as, for example, telephone pair cables, coaxial cables or optical fiber cables, and for channels of the wireless type, that is, radio connections such as the GSM network, WiFi connections or satellite connections.

Methods for sharing a channel among a plurality of users are known from documents US 2012/0574748 and US 2010/088443.

One of the objects of the present invention is to provide a telecommunication method and/or system that allows a wired or wireless, terrestrial or satellite communication channel to be used efficiently. Thanks to the present invention, it is possible to use the channel exploiting all of its potential, guaranteeing the best possible service to the users.

The above object is achieved by the teaching of the independent claims.

According to an embodiment of the present invention, the same can concern a communication method using a channel shared by several users, wherein the users can access the channel based on priority values associated with the users themselves.

Thanks to this approach, the channel can always be exploited efficiently, since the users are not subject to "a priori" limitations that may limit access to the channel also when this is not necessary, for example during periods of reduced use. Furthermore, thanks to the presence of different priority values associated with the users, it is possible to diversify the priority of each individual user during congestion periods, thus avoiding any indiscriminate slowdown for all of the users.

According to another embodiment of the invention, the method is structured in such a way that at least one of the priority values varies over time.

Thanks to this type of approach, it is possible to modify the priority of the users, for example based on how the channel is used by the various users.

According to another embodiment of the invention, the method is structured in such a way that the priority values vary based on the use of data made by the users over a predetermined period of time according to priority variation rules. Thanks to this type of approach, it is possible to establish rules of use according to which the users know how their channel access priority will be managed in case of congestion, based on the traffic generated by the users.

According to another embodiment of the invention, the method is structured in such a way that the priority variation rules include a rule according to which at least one of the priority values of a user increases if the user uses less than a first predetermined level of data in the predetermined period of time.

Thanks to this type of approach, the users making a low use can gain a higher priority level, if available, or maintain the maximum priority level available.

According to another embodiment of the invention, the method is structured in such a way that the priority variation rules include a rule according to which at least one of the priority values of a user remains constant if the user uses between a first and a second predetermined level of data in the predetermined period of time.

Thanks to this type of approach, the users making a medium use can maintain their present level of priority.

According to another embodiment of the invention, the method is structured in such a way that the priority variation rules include a rule according to which at least one of the priority values of a user decreases if the user uses more than a second predetermined level of data in the predetermined period of time.

Thanks to this type of approach, the users making a high use are subject to a decrease in their present level of priority, or maintain the lowest priority level available, in such a way that these users do not saturate the channel to the detriment of other users with less intense traffic.

According to another embodiment of the invention, the method is structured in such a way that the priority variation rules have different values for at least two different users.

Thanks to this type of approach, it is possible to define different rules for users having different profiles, like for example a corporate profile needing more traffic and/or higher priority and a residential profile needing less traffic and/or lower priority. A request for rules suitable for less traffic/lower priority, as required by a residential profile, can be associated with a lower price for access to the channel.

According to another embodiment of the invention, the method is structured in such a way that the priority variation rules have different values for dowloaded data and/or uploaded data.

Thanks to this type of approach, it is possible to diversify the approach for users needing a large quantity of data to be uploaded, such as a server, and users needing a large quantity of data to be downloaded, such as a client.

According to another embodiment of the invention, the method is structured in such a way that each user has a plurality of priority values associated with a plurality of types of data, wherein the priority variation rules have different values for at least two different types of data.

Thanks to this type of approach, it is possible to guarantee that data that are important for the user, such as TCP data, have less penalizing priority variation rules than data that are less important for the user, such as operating system update data.

According to another embodiment of the invention, the method is structured in such a way that the predetermined time interval is different for at least two different users.

Thanks to this approach, it is possible to check the users with heavier traffic more frequently and the users with lighter traffic less frequently, so as to reduce the total quantity of checks to be carried out and thus needing less resources for the checking process.

The invention furthermore concerns a device configured in such a way as to implement the communication method described above.

According to another embodiment of the invention, the device comprises at least one first memory suited to store the priority values associated with the users. According to another embodiment of the invention, the device comprises at least one traffic analysis element suited to assess the use of data made by the users in a predetermined period of time.

The invention will be described in greater detail here below by way of example, with reference to advantageous embodiments and to the drawings. The embodiments described are only possible configurations, in which the individual characteristics can in any case, as described above, be implemented independently of one another or can be omitted. Identical elements represented in the drawings are indicated by the same reference signs. Parts of the description concerning identical elements illustrated in the drawings can be omitted. In the drawings:
- Figure 1 schematically shows a possible solution of access and transmission towards the internet;
- Figure 2 schematically shows an example of algorithm for changing the priority coefficient for channel sharing.

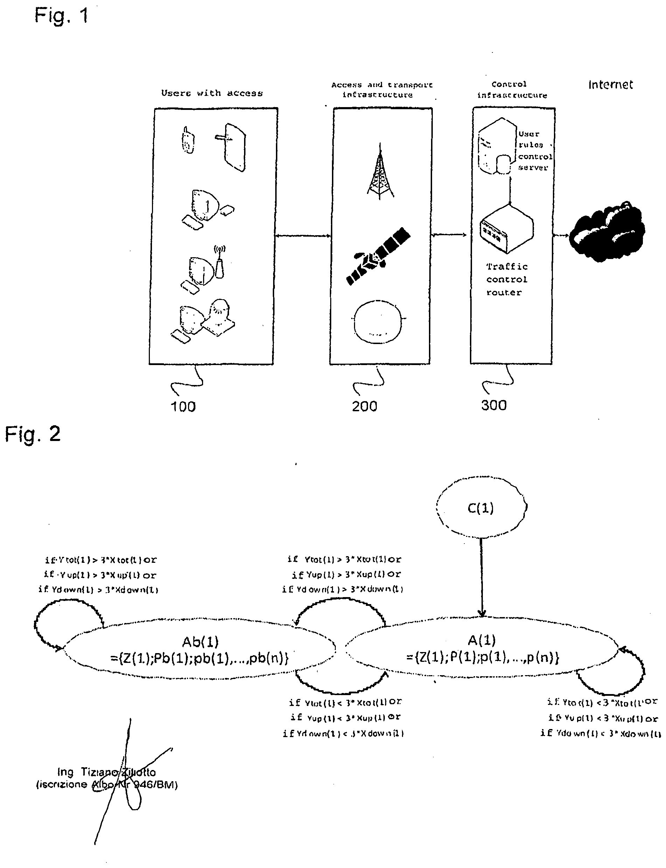

As shown in Figure 1, users with their respective device and modem are indicated by the reference number 100. The user can use different devices for the connection, like for example a PC, a tablet or a smartphone. Each device operates based on different possible network access technologies that are distinguished between wired and wireless technologies, for example wireless LAN, UMTS, LTE, WiMax, satellite, ADSL, optical fiber, wired LAN, etc. The access and transmission infrastructure 200 provides for collecting data from/for the users and aggregating them in order to convey them towards the internet output/input. Access technologies are different and can be, for example, wired terrestrial technology such as optical fiber and adsl, wireless terrestrial technology such as UMTS, LTE and WiMax, or wireless satellite technology. In all the cases of wireless networks, both terrestrial and satellite, the radio resources are shared by several users. In the networks accessed via wired connections the resources are generally dedicated to a single user for part of the network, however within the access and transmission network, even for wired networks, the traffic generated by different users is "multiplexed", that is, conveyed through shared transmission means. For example, several ADSL or optical fiber connections of various users are grouped in a single router and successively transported by one or more transmission cables/fibers. During this step, even for wired networks transmission resources are shared in a manner that is analogous to that found in wireless networks, where radio access is shared by several users.

Before the output/input from/towards the internet, in the network operator there is a traffic control infrastructure 300. This infrastructure controls both the general traffic of all the users and, specifically, the traffic of the individual users. This infrastructure comprises a Traffic Control Router (TCR) that is capable of analysing, checking, counting, verifying and if necessary modifying all or part of the actual traffic circulating in the network. Said TCR is also called "policy enforcer" as it can read all the user traffic and apply the established management policies to the traffic. The traffic management rules can be defined in a dedicated server called User Rules Control Server (URCS). In this server the network operator defines the traffic management policies, like for example the policies for tariff setting, counting, priority, blocking, for each individual user or group of users.

One of the problems encountered in the implementation of such a communication system, in which the channel is shared by several users, is the management of conflicts and of channel congestion. This applies independently of the type of traffic, TCP, FTP or email, for example, and independently of the type of channel, be it wired or wireless. In other words, in the case where the quantity of data that the users intend to transmit and/or receive through the channel exceeds the capacity of the channel for transmission and/or reception, that is, in case of congestion, it is important to implement mechanisms that allow the users to keep using the channel. Even during periods in which there is no congestion, in any case, it is preferable to use methods that allow the channel to be used exploiting all of its capacity.

Among the known solutions (alternative to this implementation) proposed for resolving the problem of congestion, the solution with a fixed volume can be mentioned by way of example. In this case, the quantity of data transmitted and/or received through the shared channel has a fixed limit per user, generally for a given lapse of time. For example, data connections on mobile phone networks are often limited to a given number of GBs per month. Once said monthly limit has been reached, the user cannot access the transmission means any longer, for example by shifting all the traffic on another, older and slower network, or the user is allowed to access the transmission means but with a limited band.

In another known solution costs are based on consumption. In this case, tariff setting is structured based on the quantity of data transmitted and/or received.

These two solutions are a deterrent for congestion, but they do not solve the problem. In both cases, the user will actually benefit from the minimization or at least from the control of the exchanged data. This automatically leads to a reduced average quantity of data in transit through the channel, thus reducing the occurrence of congestion situations. Nevertheless, for example, there may be cases in which several users are interested in using the channel at the same time and still have enough traffic available to do so. In these cases, all the users are indiscriminately slowed down.

It can be noticed, furthermore, that neither of the above mentioned techniques makes an efficient use of the transmission channel. For example, in the first case, a user that has reached his/her traffic limit cannot access the communication channel, even in the cases where no other user wants to access the channel. In this case the user gets a negative perception of the service offered, even if at that moment the channel may avoid such a problem. In other words, the channel capacity is not exploited completely, to the detriment of the user's perception of the service and with no advantage at all for the channel manager.

It is still desirable, therefore, to be able to develop a technique that can manage channel congestion and/or also makes it possible to exploit the channel efficiently, in such a way as to offer the users the best possible service in terms of communication. Special embodiments of the present invention make it possible to obtain both of these benefits at the same time.

As an alternative to the solutions just described above, some embodiments of the invention make it possible to profile the users that want to access the channel, assigning at least one priority coefficient to each user and/or to each type of data or service used by the user. The priority coefficient can vary dynamically based on initial data, such as the type of contract subscribed by the user, and/or based on instant data, such as current traffic in the channel, and/or based on historical data, such as the quantity of data generally used by the user in a given time interval, and/or based on the specific type of data that the user intends to transmit/receive or on the services, such as voice data, FTP data, TCP data, etc.

In general, by assigning priority coefficients the subdivision of the channel is made based on said coefficients, so that users with higher priority have wider access to the channel and users with lower priority have more limited access. In this way, in case of congestion it is possible to reduce access to the channel in a manner that is not indiscriminate, but in such a way that users with higher priority are less penalized. In the same way, in the presence of a free channel required only by users with low priority, these are allowed to access all the available resources, thus offering the best possible service and a use of the channel that is as efficient as possible.

It can thus be noted that the present invention does not need to specify in what way the resources of the channel are shared, based on priority. Several schemes are available that, given a specific channel, make it possible to allocate the band based on priority coefficients provided for this purpose. In other words, the resources of the channel can be shared in various known manners, which can be applied in combination with the present invention.

The present invention, therefore, concerns not so much the manner in which priority coefficients are used by the channel manager to share the resources, but rather the manner in which said coefficients are calculated. In particular, the present invention provides a system for calculating priorities based on specific input parameters, which allows the priorities of the individual nodes seeking access to the channel or even of the individual types of traffic of each node to vary over time.

In other words, the present invention defines a system for profiling user traffic that is capable of avoiding congestion in general and/or can allow the differentiated management among the various users, and/or can allow the dynamic management of the parameters that assign bands to individual users, and/or can make congestion selective, that is, limited only to some users and/or some services. The invention, therefore, is based on the general principle that the congestion/conflict of the transmission means can be managed in a dynamic way and more specifically according to the use/requests of use of the transmission means, and/or instant and/or historical information on the channel and/or on each user.

Generally, thanks to this type of approach, if the transmission system is not congested there are no effects on user traffic. In other words, if in the system there is space for transmission, traffic finds a way to flow through the transmission means independently of priority and is not uselessly slowed down. If, on the other hand, there is a temporary congestion, the traffic/service with higher priority takes precedence over the traffic/service with lower priority. Thus, it may happen that the user perceives a slowdown only if there is a situation of congestion and his/her priority level is low. The specific way in which the channel will be shared, based on the priority coefficients, is not relevant for the purposes of the present invention and several systems currently available can be used. In an example that has been simplified on purpose for the sake of easier understanding, in a case in which a higher priority coefficient means higher priority, the total band can be divided by the sum of the priority coefficients and each user or service can be assigned a band corresponding to the result of this division, multiplied by its priority coefficient. This, however, is just one possible implementation for explicative purposes and alternative and more complex systems can be used.

Several methods for managing priority coefficients according to the present invention are illustrated here below. The general concept is that priority coefficients start from a predefined value, for example the contract subscribed by the user, for each user and/or each service, and evolve over time according to predefined rules that, for example, can also be contained in the contract of the user, based on the data received and/or transmitted by the user and/or based on the service.

The priority level for an individual user, or independently for each single service used by each user, can vary over time. For example, based on the volume of traffic developed or based on the historical data regarding the use made by that user. In some embodiments of the invention, priority may also be lowered by one level whenever a user exceeds a predetermined quantity of data in a predetermined time interval. For example, a limit may be set at 1GB/month, or for example other time limits, such as daily or weekly limits, may be set. In a similar manner, priority may also be increased by one level, at the moment when the traffic threshold is not exceeded during the predetermined period of time. In a similar manner, again, it is possible to define priority changes of more than one level, based on different traffic thresholds. For example, if a user uses more than 1GB/month priority is lowered by one level, and if the user uses more than 2GB/month priority is lowered by two levels.

Priority can vary for the entirety of the user traffic or for specific protocols and/or applications used by the same user.

In a first example suited to describe a possible implementation of the concept illustrated above, a system with 4 priority classes, P1-P4, is considered, said classes being ordered from the highest to the lowest, and wherein all the users start with maximum priority, that is, P1.

By way of example, three users U1, U2 and U3 using two services S1 and S2 (for example S1 = WEB navigation; S2=FTP, file transfer) may all start with the following initial priority levels:

| | |
|---|---|
| U1, S1 | P1 |
| U1, S2 | P1 |
| U2, S1 | P1 |
| U2, S2 | P1 |
| U3, S1 | P1 |
| U3, S2 | P1 |

with the following traffic time limits and the corresponding priority variations:

| | |
|---|---|
| less than 0.5GB/month | Pn=Pn-1 |
| between 0.5GB/month and 1GB/month | Pn=Pn |
| between 1GB/month and 2GB/month | Pn=Pn+1 |
| more than 2GB/month | Pn=Pn+2 |

These limits are indicated just by way of example and the present invention is not limited to these traffic values or to these time values.

Assuming that the following traffic is required by each application, meaning the traffic the application intends to send/receive for 1-month blocks, expressed in GB:

| | 1 month | 2 months | 3 months |
|---|---|---|---|
| U1, S1 | 0 | 0 | 0 |
| U1, S2 | 0 | 0 | 2.1 |
| U2, S1 | 0 | 2.1 | 0 |
| U2, S2 | 1.1 | 1.1 | 0 |
| U3, S1 | 0.3 | 0.7 | 2.1 |
| U3, S2 | 2.1 | 0.1 | 1.1 |

then the priorities of the services of the individual users would vary as follows, considering that at the initial moment, and thus during the first month, priority is fixed at a predetermined value PI, since there is no historical data on consumption to be assessed. As already explained, the predetermined initial value may also be different for different users and/or services.

| | 1 month | 2 months | 3 months |
|---|---|---|---|
| U1, S1 | P1 | P1 | P1 |
| U1, S2 | P1 | P1 | P1 |
| U2, S1 | P1 | P1 | P3 |
| U2, S2 | P1 | P2 | P3 |
| U3, S1 | P1 | P1 | P1 |
| U3, S2 | P1 | P3 | P2 |

The priority levels of each user can be stored and managed by the User Rules Control Server that collects the data from the Traffic Control Router for each user and/or service and defines the priority of each user and/or service.

The priority values can thus be used to establish how the total band BT of the channel is subdivided according to various methods that can be used together with the present invention and are not described as they are not specific for the purposes of the invention.

According to a variant of the previous model there may be some users or services with fixed priority. This decision can be based on the contract of the user or on the importance of the service. For example, emergency messages broadcasting services could be constantly assigned P1 priority.

Additionally, or alternatively, a professional user could always be assigned P1 priority independently of the historical records, while a residential user may choose to be assigned P4 priority in such a way as to reduce the cost of subscription to the communication service.

Additionally, or alternatively, a residential user may opt for variable priority but within a predetermined time interval, for example between P2 and P4. Again additionally, or alternatively, it is possible to define different consumption levels for different users. For example, the following levels may be defined for a professional user:

| | |
|---|---|
| less than 5GB/month | Pn=Pn-1 |
| between 5GB/month and 10GB/month | Pn=Pn |
| between 10GB/month and 20GB/month | Pn=Pn+1 |
| More than 20GB/month | Pn=Pn+2 |

while the following, more restrictive levels may be defined for a domestic user, with a lower subscription cost

| | |
|---|---|
| less than 0.5GB/month | Pn=Pn-1 |
| between 0.5GB/month and 1GB/month | Pn=Pn |
| between 1GB/month and 2GB/month | Pn=Pn+1 |
| more than 2GB/month | Pn=Pn+2 |

Again additionally, or alternatively, instead of modifying the quantity of traffic between two different types of user, it is possible to modify the priority level variations, thus obtaining, for example, the following levels for a professional user:

| | |
|---|---|
| less than 0.5GB/month | Pn=Pn-1 |
| between 0.5GB/month and 1GB/month | Pn=Pn |
| between 1GB/month and 2GB/month | Pn=Pn+1 |
| more than 2GB/month | Pn=Pn+2 |

and the following, more restrictive levels for a residential user:

| | |
|---|---|
| less than 0.5GB/month | Pn=Pn |
| between 0.5GB/month and 1GB/month | Pn=Pn+1 |
| between 1GB/month and 2GB/month | Pn=Pn+2 |
| more than 2GB/month | Pn=Pn+3 |

Again additionally, or alternatively, the priority level variations may be different for each type of service, in such a way as to slow down a given type of data traffic more quickly and another type of data traffic less quickly. For example, background services, such as software update data, may have lower priority or lower consumption limits before getting a lower priority level, while services like internet navigation, which are easier to perceive for the user, may have higher priority or higher consumption limits before getting a lower priority level.

Another example of implementation of the present invention is described here below with reference to a case where, for example, there are four priority levels.

| Subscription name | Subscription priority |
|---|---|
| A1 | 1 |
| A2 | 2 |
| A3 | 2 |
| A4 | 3 |
| A5 | 4 |
| A6 | 1 |

The table shown above describes six examples of subscription, A1-A6, that may possibly be offered. As can be seen, each subscription has an initial priority level between 1 and 4. Subscriptions with the same priority but a different name (for example, A1 and A6) can also be diversified by other factors, not illustrated herein, for example by the maximum monthly traffic available and/or by the maximum peak band allocated, etc.

The table below shows how, for a group of given users C1-Cn, the initial priority is assigned based on the definitions given in the table above.

| Client name | Subscription | Current priority (variable over time) |
|---|---|---|
| C1 | A1 | 1 |
| C2 | A1 | 1 |
| C3 | A2 | 2 |
| C4 | A3 | 2 |
| C5 | A1 | 1 |
| C6 | A4 | 3 |
| C7 | A6 | 1 |
| C8 | A2 | 2 |
| C9 | A5 | 4 |
| C10 | A6 | 1 |
| ... | ... | ... |
| ... | .... | ... |
| ... | .... | ... |
| Cn | A1 | 1 |

This association is made at the initial moment when the shared channel is set. Successively, the priority level of each individual user can vary, as described above.

Alternatively or additionally, Figure 2 describes a possible example of implementation of a finite-state machine suited to vary the priority coefficient.

In particular, according to the algorithm illustrated, the user C(n) accesses the state machine during the first cycle of the check following its activation. The diagram describes the user C(1) representing a generic user C(n) without losing its generic nature.

At the beginning of the assessment the user is placed in the state of a standard subscriber, with priority according to its subscription, and not deprioritized. By separately assessing and comparing the values of Ytot, Yup, Ydown respectively against the values of Xtot, Xdown, Xup, the algorithm decides whether to maintain the user in the current state or move the user to a deprioritized state, informing the traffic management system. Here, the values of Ytot, Yup, Ydown are the total traffic values concerning data uploaded and downloaded by the user, while the values of Xtot, Xdown, Xup are the predefined total traffic limits concerning uploaded and downloaded data, preferably based on the type of subscription.

The assessment of Ytot, Yup, Ydown can take place after a predefined time, such as one week, two weeks or one month, for example. Once the predefined time has elapsed, an analysis cycle is carried out that assesses the current state of the user and applies the calculation again, deciding whether to maintain the user in the current state or move the user. For example, starting from the initial state A1, if the user makes a use Ytot in the predefined time that is smaller than 3 times Xtot, on expiry of the predefined time the user will maintain priority corresponding to state A(1). On the other hand, for example, if Ytot exceeds the value of 3 times Xtot, then the user is declassed, for a predefined time, to the priority level corresponding to state Ab(1), with priority lower than A1. For example, again, if on expiry of the predefined time Ytot exceeds again the value of 3 times Xtot, the user will remain associated with state Ab(1), while if Ytot is smaller than 3 times Xtot, the user will be returned to state A(1), with higher priority.

It is clear that this scheme can be implemented with other states, depending on the number of priority levels to be implemented.

It is also clear that the conditions of passage from one state to another, schematically illustrated herein as assessed based on the total traffic, can be different for download or upload. For example, in simpler embodiments only the total traffic may be taken in consideration. Again for example, in more complex embodiments, the traffic of different services may be taken in consideration independently, for example mail traffic, voice traffic, http traffic, etc.

The various alternatives defined above can be combined, as will be clear to the expert in the art, guaranteeing as much flexibility as possible to the users.

In the description, reference has been made to the traffic of each user, or of every application of a user, without discriminating between upload and download traffic. It will be clear to the expert in the art that the present invention can be adapted in such a way as to apply it only to download traffic or upload traffic or separately to both of them, potentially also with different consumption values for the two types of traffic, in order to modify priorities for download and upload in a different manner. For example, a residential user may prefer a configuration according to which his/her priority lowers less quickly with consumption of downloaded data than with consumption of uploaded data. On the contrary, a business user, possibly with a server that needs to answer to connection requests from hundreds or thousands of other users, may prefer the opposite solution, according to which priority lowers less quickly with consumption of uploaded data than with consumption of downloaded data.

## Claims

1. Communication method using a channel shared by several users,
**wherein** the users access the channel based on priority coefficients associated with the users,
**wherein** the total band of the channel is shared among the users based on the priority coefficients,
**wherein** at least one of the priority coefficients changes over time according to priority variation rules,
the priority coefficient for a user changes over time based on the quantity of data used by the user over a predetermined period of time.

2. Method according to claim 1, **wherein** the priority coefficient of the user increases if the user uses less than a first predetermined level of data in the predetermined period of time wherein for each user different priorities and different traffic thresholds are assigned for different network services.

3. Method according to claim 1 or 2, **wherein** the priority coefficient of the user remains constant if the user uses between a first and a second predetermined level of data in the predetermined period of time.

4. Method according to any of claims from 1 to 3, **wherein** the priority coefficient of the user decreases if the user uses more than a second predetermined level of data in the predetermined period of time.

5. Method according to any of the claims from 1 to 4, **wherein** the priority variation rules have different coefficients for at least two different users.

6. Method according to any of the claims from 1 to 5, **wherein** the priority variation rules have different coefficients for downloaded and/or uploaded data.

7. Method according to any of the claims from 1 to 6, **wherein** each user has a plurality of priority coefficients associated with a plurality of types of data, and **wherein** the priority variation rules have different coefficients for at least two different types of data.

8. Method according to any of the claims from 1 to 7, **wherein** the predetermined time interval is different for at least two different users.

## Patentansprüche

1. Kommunikationsverfahren mit einem von mehreren Benutzern geteilten Kanal,
**wobei** die Benutzer auf Basis von den Benutzern zugeordneten Prioritätskoeffizienten Zugang zum Kanal haben,
**wobei** das gesamte Band des Kanals auf Basis der Prioritätskoeffizienten von den Benutzern geteilt wird,
**wobei** sich wenigstens einer der Prioritätskoeffizienten mit der Zeit nach Prioritätsvariationsregeln ändert,
sich der Prioritätskoeffizient für einen Benutzer mit der Zeit je nach der vom Benutzer über eine vorbestimmte Zeitspanne genutzten Datenmenge ändert.

2. Verfahren nach Patentanspruch 1, **wobei** der Prioritätskoeffizient des Benutzers zunimmt, wenn der Benutzer in der vorbestimmten Zeitspanne weniger als ein erstes vorbestimmtes Niveau an Daten nutzt, **wobei** je einzelnem Benutzer unterschiedliche Prioritäten und unterschiedliche Verkehrsschwellen für unterschiedlichen Netzwerkservice zugewiesen werden.

3. Verfahren nach Patentanspruch 1 oder 2, **wobei** der Prioritätskoeffizient des Benutzers gleich bleibt, wenn der Benutzer in der vorbestimmten Zeitspanne zwischen einem ersten und einem zweiten vorbestimmten Niveau liegende Daten nutzt.

4. Verfahren nach einem jeden der Patentansprüche von 1 bis 3, **wobei** der Prioritätskoeffizient des Benutzers sinkt, wenn der Benutzer in der vorbestimmten Zeitspanne mehr als ein zweites vorbestimmtes Niveau an Daten nutzt.

5. Verfahren nach einem jeden der Patentansprüche von 1 bis 4, **wobei** die Prioritätsvariationsregeln verschiedene Koeffizienten für wenigstens zwei verschiedene Benutzer haben.

6. Verfahren nach einem jeden der Patentansprüche von 1 bis 5, **wobei** die Prioritätsvariationsregeln unterschiedliche Koeffizienten für heruntergeladene und/oder für hochgeladene Daten haben.

7. Verfahren nach einem jeden der Patentansprüche von 1 bis 6, **wobei** jeder Benutzer eine Vielzahl von Prioritätskoeffizienten hat, die mit einer Vielzahl von Datentypen assoziiert sind, und **wobei** die Prioritätsvariationsregeln verschiedene Koeffizienten für wenigstens zwei verschiedene Datentypen haben.

8. Verfahren nach einem jeden der Patentansprüche von 1 bis 7, **wobei** das vorbestimmte Zeitintervall für wenigstens zwei verschiedene Benutzer unterschiedlich ist.

## Revendications

1. Méthode de communication utilisant un canal partagé par plusieurs utilisateurs,
**où** les utilisateurs accèdent au canal sur la base de coefficients de priorité associés aux utilisateurs,
**où** la bande totale du canal est partagée parmi les utilisateurs sur la base de coefficients de priorité,
**où** au moins un des coefficients de priorité varie dans le temps selon les règles de variation de priorité,
le coefficient de priorité pour un utilisateur varie dans le temps sur la base de la quantité de données utilisées per l'utilisateur dans une période de temps prédéterminée.

2. Méthode selon la revendication 1, **où** le coefficient de priorité de l'utilisateur augmente si l'utilisateur utilise moins d'un premier niveau prédéterminé de données dans la période de temps prédéterminée, où pour chaque utilisateur des priorités différentes et des seuils de trafic différents sont assignés pour des services de réseau différents.

3. Méthode selon la revendication 1 ou 2, **où** le coefficient de priorité de l'utilisateur reste constant si l'utilisateur utilise entre un premier et un deuxième niveau de données prédéterminé dans la période de temps prédéterminée.

4. Méthode selon l'une quelconque des revendications de 1 à 3, **où** le coefficient de priorité de l'utilisateur diminue si l'utilisateur utilise plus d'un deuxième niveau de données prédéterminé dans la période de temps prédéterminée.

5. Méthode selon l'une quelconque des revendications de 1 à 4, **où** les règles de variation de priorité présentent des coefficients différents pour au moins deux utilisateurs différents.

6. Méthode selon l'une quelconque des revendications de 1 à5, **où** les règles de variation de priorité présentent des coefficients différents pour les données déchargées et/ou pour les données chargées.

7. Méthode selon l'une quelconque des revendications de là 6, **où** chaque utilisateur a une pluralité de coefficients de priorité associés à une pluralité de types de données, et **où** les règles de variation de priorité présentent des coefficients différents pour au moins deux types de données différents.

8. Méthode selon l'une quelconque des revendications de 1à7, **où** l'intervalle de temps prédéterminé est différent pour au moins deux utilisateurs différents.
